(19) Europäisches Patentamt European Patent Office Office européen des brevets

(11) **EP 3 466 674 A1**

(12) **EUROPEAN PATENT APPLICATION**
published in accordance with Art. 153(4) EPC

(43) Date of publication:
**10.04.2019 Bulletin 2019/15**

(51) Int Cl.:
**B32B 15/08** (2006.01)   **B29C 45/14** (2006.01)
**C23F 1/16** (2006.01)

(21) Application number: **17806566.0**

(22) Date of filing: **26.05.2017**

(86) International application number:
**PCT/JP2017/019770**

(87) International publication number:
**WO 2017/209011 (07.12.2017 Gazette 2017/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.05.2016 JP 2016109286**

(71) Applicant: **Mitsui Chemicals, Inc.**
**Minato-ku**
**Tokyo 105-7122 (JP)**

(72) Inventors:
• **KIMURA Kazuki**
**Sodegaura-shi**
**Chiba 299-0265 (JP)**
• **SUGITA Haruka**
**Sodegaura-shi**
**Chiba 299-0265 (JP)**
• **TOMITA Yoshihiko**
**Sodegaura-shi**
**Chiba 299-0265 (JP)**

(74) Representative: **J A Kemp**
**14 South Square**
**Gray's Inn**
**London WC1R 5JJ (GB)**

(54) **METAL/RESIN COMPOSITE STRUCTURE, METAL MEMBER, AND METHOD FOR MANUFACTURING METAL MEMBER**

(57)   A metal-resin composite structure (106) is formed by bonding a metal member (103) and a resin member (105) formed of a resin composition. A surface roughness measured regarding six linear portions in total including three arbitrary linear portions parallel with each other and another three arbitrary linear portions perpendicular to the former three linear portions on a surface (110) of the metal member (103), based on JIS B0601 (corresponding international standard: ISO4287) satisfies both Requirements (1) and (2) .
(1) An average value of ten point average roughnesses (Rz) at an evaluated length of 4 mm is smaller than 20 $\mu$m.
(2) An average value of mean width of the profile elements (RSm) at an evaluated length of 4 mm is equal to or greater than 20 $\mu$m and smaller than 77 $\mu$m.

FIG.1

EP 3 466 674 A1

**Description**

TECHNICAL FIELD

The present invention relates to a metal-resin composite structure, a metal member, and a manufacturing method of a metal member.

BACKGROUND ART

In order to realize weight reduction of various industrial components, the use of a resin as a substitute of metal has been started in various fields. In a case where a metal component cannot be completely substituted with the resin, a method using a composite component obtained by integrally bonding a metal molded body and a resin molded body is useful.

In recent years, as a technology of integrally bonding a metal molded body and a resin molded body, a method of bonding an engineering plastic including a polar group having affinity with a metal member, with the metal member having a surface, on which fine concavo-convex is formed, is investigated (for example, Patent Documents 1 to 5) .

For example, Patent Documents 1 to 3 disclose a technology of performing a dipping treatment of an aluminum alloy into a hydrazine aqueous solution to form recesses having a diameter of 30 to 300 nm on a surface thereof, and bonding a polybutylene terephthalate (PBT) resin or a polyphenylene sulfide (PPS) resin to the treated surface.

Patent Document 4 discloses a technology of performing an anodic oxidation treatment of an aluminum material in an electrolytic bath of phosphoric acid or sodium hydroxide to form an anodic oxidation film having recesses having a diameter equal to or greater than 25 nm on a surface of the aluminum material, and bonding an engineering plastic to the treated surface.

Patent Document 5 discloses a technology of forming fine concavo-convex portion or holes on an aluminum alloy with a specific etching agent, and injecting and bonding a polyamide 6 resin, a polyamide 66 resin, and PPS to the holes.

In Patent Documents 1 to 5, an engineering plastic having a polar group is used as a resin member. Meanwhile, as an example in which the technology described above is applied regarding a non-polar polyolefin-based resin not having affinity with a metal member, a technology of using an acid-modified polyolefin resin obtained by introducing a polar group to a polyolefin-based resin (Patent Document 6) or a technology of applying a concavo-convex structure satisfying a specific shape parameter to a rough surface so as to join polyolefin thereto is disclosed (Patent Document 7).

RELATED DOCUMENT

PATENT DOCUMENT

[Patent Document 1] Japanese Unexamined Patent Publication No. 2004-216425
[Patent Document 2] Japanese Unexamined Patent Publication No. 2009-6721
[Patent Document 3] Pamphlet of International Publication No. 2003/064150
[Patent Document 4] Pamphlet of International Publication No. 2004/055248
[Patent Document 5] Japanese Unexamined Patent Publication No. 2013-52671
[Patent Document 6] Japanese Unexamined Patent Publication No. 2002-3805
[Patent Document 7] Pamphlet of International Publication No. 2015/008847

SUMMARY OF THE INVENTION

TECHNICAL PROBLEM

However, in the method disclosed in Patent Document 6, it is necessary to bring a molten resin into contact with a metal for a long period of time under high pressure. The molding is normally performed by a laminating method, a pressing method or the like, and accordingly, a degree of freedom of a shape of a molded body is limited. In addition, regarding all of liquid chemical etching methods including the method disclosed in Patent Document 7, it is strongly necessary to provide a rational process in which the amount of metal to be roughened is reduced as much as possible, while maintaining a high bonding strength with a resin such as polyolefin.

The invention is made in consideration of these circumstances and an object thereof is to provide a metal-resin composite structure in which a metal member and a resin member formed of a resin composition can be directly bonded to each other without deformation of the resin ) or the like and bonding strength of the metal member and the resin member is excellent.

The invention further provides a metal-resin composite structure in which a resin is strongly bonded to a surface of a rough metal surface, where the amount of metal to be dissolved and eliminated on a liquid chemical side is minimized, by a well-known liquid chemical etching method.

SOLUTION TO PROBLEM

In order to improve bonding strength of a metal member and a resin member formed of a resin composition, the inventors have studied adjustment of a ten point average roughness (Rz) of a surface of a metal member.

However, it is clear that the bonding strength of the metal member and the resin member cannot be sufficiently improved, by only simply adjusting the ten point average roughness (Rz) of the surface of the metal member.

Therefore, the inventors have made intensive studies regarding a design guideline for improving the bonding strength of the metal member and the resin member formed of a resin composition. As a result, the inventors have found that mean width of the profile elements (RSm) of the surface of the metal member is advantageous as the design guideline and approached to the invention.

That is, according to the invention, a metal-resin composite structure, a metal member, and a manufacturing method of a metal member described below are provided.

[1] A metal-resin composite structure which is formed by bonding a metal member and a resin member formed of a resin composition, in which a surface roughness measured regarding six linear portions in total including three arbitrary linear portions parallel with each other and another three arbitrary linear portions perpendicular to the former three linear portions on a surface of the metal member, based on JIS B0601 (corresponding international standard: ISO4287) satisfies both Requirements (1) and (2).

(1) An average value of ten point average roughnesses (Rz) at an evaluated length of 4 mm is smaller than 20 $\mu$m.
(2) An average value of mean width of the profile elements (RSm) at an evaluated length of 4 mm is equal to or greater than 20 $\mu$m and smaller than 77 $\mu$m.

[2] The metal-resin composite structure according to [1], in which the surface roughness measured regarding six linear portions in total including three arbitrary linear portions parallel with each other and another three arbitrary linear portions perpendicular to the former three linear portions on a surface of the metal member, based on JIS B0601 (corresponding international standard: ISO4287) further satisfies Requirement (3).
(3) An average value of arithmetic average roughnesses (Ra) at an evaluated length of 4 mm is smaller than 5 $\mu$m.
[3] The metal-resin composite structure according to [1] or [2], in which the surface roughness measured regarding six linear portions in total including three arbitrary linear portions parallel with each other and another three arbitrary linear portions perpendicular to the former three linear portions on a surface of the metal member, based on JIS B0601 (corresponding international standard: ISO4287) further satisfies Requirement (1A).
(1A) An average value of ten point average roughnesses (Rz) at an evaluated length of 4 mm is equal to or greater than 1 $\mu$m and equal to or smaller than 15 $\mu$m.
[4] The metal-resin composite structure according to any one of [1] to [3], in which the surface roughness measured regarding six linear portions in total including three arbitrary linear portions parallel with each other and another three arbitrary linear portions perpendicular to the former three linear portions on a surface of the metal member, based on JIS B0601 (corresponding international standard: ISO4287) further satisfies Requirement (3A).
(3A) An average value of arithmetic average roughnesses (Ra) at an evaluated length of 4 mm is smaller than 3 $\mu$m.
[5] The metal-resin composite structure according to any one of [1] to [4], in which the metal member is formed of metal materials containing one kind or two or more kinds of metals selected from iron, a steel material, stainless steel, aluminum, an aluminum alloy, magnesium, a magnesium alloy, copper, a copper alloy, zinc, a zinc alloy, tin, a tin alloy, titanium, and a titanium alloy.
[6] The metal-resin composite structure according to any one of [1] to [5], in which the resin composition contains one kind or two or more kinds of thermoplastic resins selected from a polyolefin-based resin, a polyester-based resin, a polyphenylene-based resin and a polyamide-based resin.
[7] The metal-resin composite structure according to any one of [1] to [6], in which the resin composition contains one kind or two or more kinds of thermoplastic resins, having a glass transition temperature equal to or higher than 140°C, selected from a polyether ether ketone resin, a polyether ketone resin, a polyimide resin, a polyphenylsulfone resin, and a polyether sulfone resin.
[8] The metal-resin composite structure according to any one of [1] to [7], in which the resin composition contains one kind or two or more kinds of amorphous thermoplastic resins selected from a polystyrene resin, a polyacrylonitrile resin, a styrene-acrylonitrile copolymer resin, an acrylonitrile-butadiene-styrene copolymer resin, a polymethyl methacrylate resin, and a polycarbonate resin.

[9] The metal-resin composite structure according to any one of [1] to [8], in which the resin composition contains one kind or two or more kinds of thermoplastic elastomers selected from a polyolefin-based elastomer, a polyurethane-based elastomer, a polystyrene-based elastomer, and a polyester-based elastomer.

[10] The metal-resin composite structure according to any one of [1] to [9], in which the resin composition contains a thermosetting resin.

[11] The metal-resin composite structure according to [10], in which the resin composition containing the thermosetting resin contains at least one kind selected from a long fiber reinforced composite structure and a continuous fiber reinforced composite structure.

[12] A metal member used for bonding with a resin member formed of a resin composition, in which a surface roughness measured regarding six linear portions in total including three arbitrary linear portions parallel with each other and another three arbitrary linear portions perpendicular to the former three linear portions on a surface of the metal member, based on JIS B0601 (corresponding international standard: ISO4287) satisfies both Requirements (1) and (2).

(1) An average value of ten point average roughnesses (Rz) at an evaluated length of 4 mm is smaller than 20 $\mu$m.
(2) An average value of mean width of the profile elements (RSm) at an evaluated length of 4 mm is equal to or greater than 20 $\mu$m and smaller than 77 $\mu$m.

[13] The metal member according to [12], in which the surface roughness measured regarding six linear portions in total including three arbitrary linear portions parallel with each other and another three arbitrary linear portions perpendicular to the former three linear portions on a surface of the metal member, based on JIS B0601 (corresponding international standard: ISO4287) further satisfies Requirement (3).

(3) An average value of arithmetic average roughnesses (Ra) at an evaluated length of 4 mm is smaller than 5 $\mu$m.

[14] A manufacturing method of a metal member for manufacturing the metal member according to [12] or [13], including: a step of roughening a surface of the metal member by an electroless treatment.

[15] The manufacturing method of a metal member according to [14], in which, in the step of roughening the surface of the metal member, the surface of the metal member is subjected to a roughening treatment by an acid etching agent, and the acid etching agent contains an aqueous solution or a water dispersion, containing a metal salt (Q) represented by Formula (1).

$$MX \quad (1)$$

(In Formula (1), M represents a metal element in IA group, IIA group, IIIB group, or IVA group in the periodic table, and X represents fluorine atom, chlorine atom, bromine atom, or iodine atom)

[16] The manufacturing method of a metal member according to [15], in which, the acid etching agent contains at least one of a ferric ion and a cupric ion, and the aqueous solution or the water dispersion, containing the metal salt (Q) represented by Formula (1).

[17] The manufacturing method of a metal member according to [15] or [16], in which, the metal element (M) of Formula (1) is one or more kinds selected from Li, Na, K, Mg, Ca, Ba, and Al.

ADVANTAGEOUS EFFECTS OF INVENTION

According to the invention, it is possible to provide a metal-resin composite structure having excellent bonding strength between a metal member and a resin member formed of a resin composition. In addition, according to the roughening method disclosed in the invention, it is possible to realize weight reduction of the amount of metal to be eliminated at the time of etching, compared to a case of using a well-known roughening technology using a liquid chemical. Further, it is possible to realize substantially the same roughness parameters regarding all of the six arbitrary points on the roughened the metal surface. That is, it is possible to achieve the even roughening of the metal surface. As a result, it is possible to reduce a variation in bonding strength in a case where a composite structure is obtained.

BRIEF DESCRIPTION OF THE DRAWINGS

The above-described object and other objects, features, and advantages will become more apparent by preferred embodiments described below and the following accompanying drawings.

Fig. 1 is an outline view schematically showing an example of a structure of a metal-resin composite structure according to an embodiment of the invention.

Fig. 2 is a configuration view schematically showing an example of a process of manufacturing the metal-resin composite structure according to the embodiment of the invention.

Fig. 3 is a schematic view for explaining measurement portions of six linear portions in total including three arbitrary linear portions parallel with each other and another three arbitrary linear portions perpendicular to the former three linear portions on a surface of a metal member according to the embodiment.

Fig. 4 is a schematic view for explaining measurement portions of six linear portions in total including three arbitrary linear portions parallel with each other and another three arbitrary linear portions perpendicular to the former three linear portions on a surface of an aluminum plate obtained in each preparation example.

Fig. 5 is a conceptual view schematically showing a definition of a maximum length of a filling material.

## DESCRIPTION OF EMBODIMENTS

Hereinafter, embodiments of the invention will be described with reference to the drawings. In all drawings, the same reference numerals are used for the same constituent elements and the description thereof will not be repeated. A term "to" between numbers in this document means an expression "equal to or more than a certain value and equal to or less than the other value", if not otherwise specified.

[Metal-Resin Composite Structure]

First, a metal-resin composite structure 106 according to the embodiment will be described.

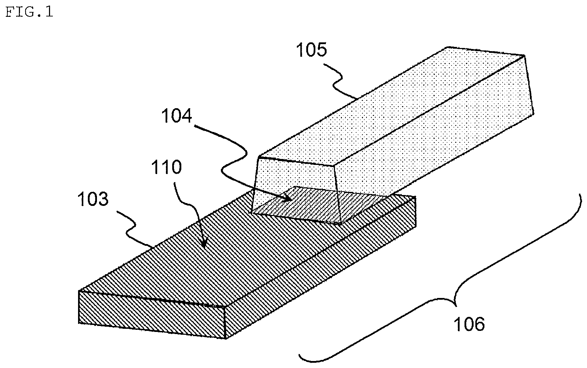

Fig. 1 is an outline view schematically showing an example of a structure of the metal-resin composite structure 106 according to the embodiment of the invention. In the metal-resin composite structure 106, a metal member 103 and a resin member 105 formed of a resin composition (P) are bonded to each other, and the metal-resin composite structure is obtained by bonding the metal member 103 and the resin member 105.

A surface roughness measured regarding six linear portions in total including three arbitrary linear portions parallel with each other and another three arbitrary linear portions perpendicular to the former three linear portions on a surface 110 of the metal member, based on JIS B0601 (corresponding international standard: ISO4287) satisfies both Requirements (1) and (2), and, in preferable aspect, further satisfies Requirement (3).

(1) An average value of ten point average roughnesses (Rz) at an evaluated length of 4 mm is smaller than 20 $\mu$m.
(2) An average value of mean width of the profile elements (RSm) at an evaluated length of 4 mm is equal to or greater than 20 $\mu$m and smaller than 77 $\mu$m.
(3) An average value of arithmetic average roughnesses (Ra) at an evaluated length of 4 mm is smaller than 5 $\mu$m.

The resin member 105 is formed of the resin composition (P).

Regarding each average value of the ten point average roughnesses (Rz), the mean width of the profile elements (RSm), and the arithmetic average roughnesses (Ra), each value obtained by averaging the ten point average roughnesses (Rz), the mean width of the profile elements (RSm), and the arithmetic average roughnesses (Ra) of the six arbitrary linear portion can be used.

The metal-resin composite structure 106 according to the embodiment is obtained by causing the resin composition (P) configuring the resin member 105 to penetrate a concavo-convex shape formed on the surface 110 of the metal member to join the metal and the resin, and forming a metal-resin boundary.

Since the concavo-convex shape suitable for improving bonding strength between the metal member 103 and the resin member 105 is formed on the surface 110 of the metal member 103, it is possible to ensure bonding properties between the metal member 103 and the resin member 105 without using an adhesiveness.

Specifically, it is thought that, by causing the resin composition (P) to permeate the concavo-convex shape of the surface 110 of the metal member satisfying Requirements (1) and (2), preferably Requirements (1), (2), and (3), a physical resisting power (anchor effect) is effectively exhibited between the metal member 103 and the resin member 105, and accordingly, the metal member 103 and the resin member 105 formed of the resin composition (P) which are normally difficult to be bonded, can be strongly bonded to each other.

In the metal-resin composite structure 106 obtained as described above, it is also possible to prevent permeation of water or moisture to the boundary between the metal member 103 and the resin member 105. That is, it is also possible to improve airtightness and watertightness of the bonding boundary of the metal-resin composite structure 106.

Hereinafter, each member configuring the metal-resin composite structure 106 will be described.

<Metal Member>

Hereinafter, the metal member 103 according to the embodiment will be described.

The surface roughness measured regarding six linear portions in total including three arbitrary linear portions parallel with each other and another three arbitrary linear portions perpendicular to the former three linear portions on a surface 110 of the metal member, based on JIS B0601 (corresponding international standard: ISO4287) satisfies both Requirements (1) and (2) and preferably further satisfies Requirement (3).

(1) An average value of ten point average roughnesses (Rz) at an evaluated length of 4 mm is smaller than 20 $\mu$m.
(2) An average value of mean width of the profile elements (RSm) at an evaluated length of 4 mm is equal to or greater than 20 $\mu$m and smaller than 77 $\mu$m.
(3) An average value of arithmetic average roughnesses (Ra) at an evaluated length of 4 mm is smaller than 5 $\mu$m.

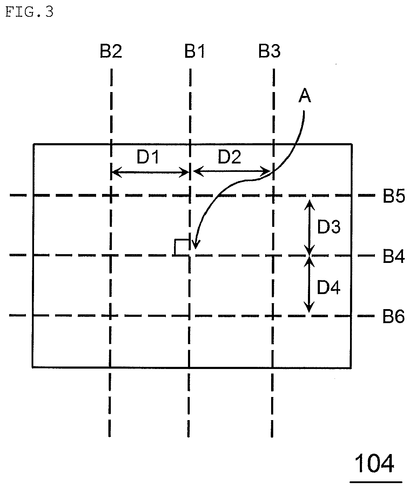

Fig. 3 is a schematic view for explaining six linear portions in total including three arbitrary linear portions parallel with each other and another three arbitrary linear portions perpendicular to the former three linear portions on the surface 110 of the metal member.

Regarding the six linear portions, six linear portions B1 to B6 shown in Fig. 3 can be selected. First, as a reference line, a center line B1 passing through a center portion A of a bonding portion surface 104 of the metal member 103 is selected. Then, linear lines B2 and B3 parallel with the center line B1 are selected. Next, a center line B4 perpendicular to the center line B1 is selected, and linear lines B5 and B6 which are perpendicular to the center line B1 and parallel with the center line B4 are selected. Here, vertical distances D1 to D4 between each linear line are, for example, 2 to 5 mm.

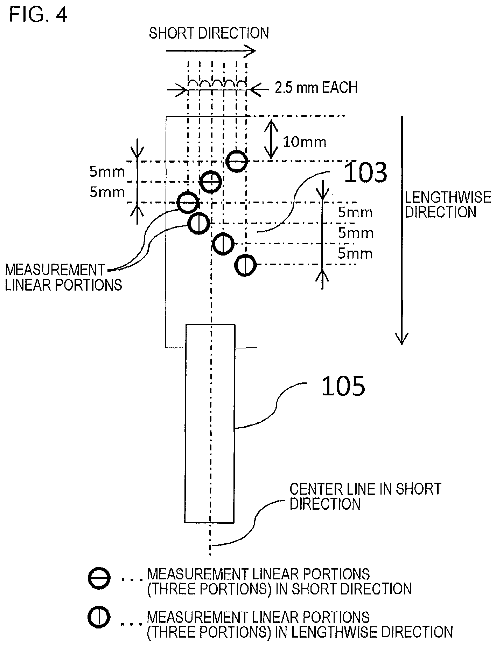

Normally, a surface roughening treatment is performed with respect to the entire surface 110 of the metal member, not only with respect to the bonding portion surface 104 of the surface 110 of the metal member, and accordingly, for example, as shown in Fig. 4, the six linear portions may be selected from portions on the same plane of the bonding portion surface 104 of the metal member 103 but other than the bonding portion surface 104.

In a case where both Requirements (1) and (2) are satisfied and all of Requirements (1), (2), and (3) are preferably satisfied, a reason for obtaining the metal-resin composite structure 106 having excellent bonding strength is not necessarily clear, but it may be because the bonding portion surface 104 of the metal member 103 has a structure capable of effectively exhibiting the anchor effect between the metal member 103 and the resin member 105.

The inventors have studied regarding adjustment of a ten point average roughness (Rz) of a surface of a metal member, in order to improve bonding strength between a metal member and a resin member formed of a resin composition.

However, it is clear that it is difficult to sufficiently improve the bonding strength between the metal member and the resin member, by only simply adjusting the ten point average roughness (Rz) of the surface of the metal member.

Here, the inventors have thought that a measure of mean width of the profile elements (RSm) is useful as indexes representing excess of the bonding strength between the metal member surface and the resin member and a metal etching amount, and the intensive studies have made by the inventors. As a result, it is found that, by adjusting the mean width of the profile elements (RSm) of the surface of the metal member and the ten point average roughness (Rz) to be in specific ranges, in a preferred aspect, by further setting the arithmetic average roughness (Ra) to be equal to or smaller than a specific value, it is possible to effective exhibit the anchor effect between the metal member 103 and the resin member 105 and reduce the amount of metal to be eliminated by etching, at the same time. As a result, the inventors have found that it is possible to economically exhibit the metal-resin composite structure 106 having excellent bonding strength, and the invention have completed.

From a viewpoint of further improving the bonding strength between the metal member 103 and the resin member 105, the surface roughness measured regarding six linear portions in total including three arbitrary linear portions parallel with each other and another three arbitrary linear portions perpendicular to the former three linear portions on a surface 110 of the metal member, based on JIS B0601 (corresponding international standard: ISO4287) preferably further satisfies one or more Requirements among Requirements (1A) and (1B).

(1A) An average value of ten point average roughnesses (Rz) at the evaluated length of 4 mm is preferably 1 to 15 $\mu$m, more preferably 2 to 15 $\mu$m, even more preferably 2 to 13 $\mu$m, and still more preferably 2 to 10 $\mu$m, and particularly preferably 2.5 to 10 $\mu$m.
(1B) The ten point average roughnesses (Rz) at the evaluated length of 4 mm regarding all of the linear portions are preferably smaller than 20 $\mu$m, more preferably 1 to 15 $\mu$m, even more preferably 2 to 15 $\mu$m, still more preferably 2 to 13 $\mu$m, still even more preferably 2 to 10 $\mu$m, and particularly preferably 2.5 to 10 $\mu$m.

From a viewpoint of preventing a variation in bonding strength between the metal member 103 and the resin member 105, a standard deviation ($\sigma$) of the ten point average roughness (Rz) at the evaluated length of 4 mm is preferably equal to or smaller than 1.0 $\mu$m, more preferably 0.8 $\mu$m, and particularly preferably 0.5 $\mu$m.

In order to further reduce the etching amount of the metal in the roughening treatment performed for applying the ten point average roughness (Rz) onto the surface 110 of the metal member, while maintaining the bonding strength between the metal member 103 and the resin member 105 at a high level, the surface roughness measured regarding six linear portions in total including three arbitrary linear portions parallel with each other and another three arbitrary linear portions perpendicular to the former three linear portions on the surface 110 of the metal member, based on JIS B0601 (corresponding international standard: ISO4287) preferably further satisfies one or more Requirements among Requirements (2A) to (2D) .

(2A) An average value of mean width of the profile elements (RSm) at the evaluated length of 4 mm preferably satisfies a range equal to or greater than 30 $\mu$m and smaller than 77 $\mu$m, and is more preferably equal to or greater than 40 $\mu$m and smaller than 77 $\mu$m.
(2B) The number of linear portions in which the mean width of the profile elements (RSm) at the evaluated length of 4 mm is equal to or greater than 20 $\mu$m and equal to or smaller than 85 $\mu$m is preferably equal to or greater than 5 and more preferably 6.
(2C) The number of linear portions in which the mean width of the profile elements (RSm) at the evaluated length of 4 mm is equal to or greater than 20 $\mu$m and smaller than 77 $\mu$m is preferably equal to or greater than 5 and more preferably 6.
(2D) The mean width of the profile elements (RSm) at the evaluated length of 4 mm regarding all of the linear portions is preferably equal to or greater than 20 $\mu$m and equal to or smaller than 85 $\mu$m, more preferably equal to or greater than 20 $\mu$m and smaller than 77 $\mu$m, even more preferably equal to or greater than 30 $\mu$m and smaller than 77 $\mu$m, and particularly preferably equal to or greater than 40 $\mu$m and smaller than 77 $\mu$m.

From a viewpoint of preventing a variation in bonding strength between the metal member 103 and the resin member 105, a standard deviation ($\sigma$) of the mean width of the profile elements (RSm) at the evaluated length of 4 mm is preferably equal to or smaller than 10 $\mu$m, more preferably equal to or smaller than 8 $\mu$m and particularly preferably equal to or smaller than 6 $\mu$m.

On the surface 110 of the metal member according to the embodiment, it is preferable that an ultrafine concavo-convex structure having a nanometer size is not formed, and it is more preferable that a ultrafine concavo-convex structure at a cycle of 5 to 500 nm is not formed.

From a viewpoint of further reducing the etching amount of the metal in the roughening treatment, while maintaining the bonding strength between the metal member 103 and the resin member 105 at a high level, the surface roughness measured regarding six linear portions in total including three arbitrary linear portions parallel with each other and another three arbitrary linear portions perpendicular to the former three linear portions on the surface 110 of the metal member, based on JIS B0601 (corresponding international standard: ISO4287) preferably further satisfies Requirement (3A).

(3A) An average value of the arithmetic average roughnesses (Ra) at the evaluated length of 4 mm is preferably smaller than 3 $\mu$m and particularly preferably equal to or smaller than 2 $\mu$m. A lower limit value of the average value of the arithmetic average roughnesses (Ra) at the evaluated length of 4 mm is not particularly limited and is, for example, equal to or greater than 0.001 $\mu$m.

In addition, from a viewpoint of preventing a variation in bonding strength between the metal member 103 and the resin member 105, a standard deviation ($\sigma$) of the arithmetic average roughness (Ra) at the evaluated length of 4 mm is preferably equal to or smaller than 0.3 $\mu$m, more preferably equal to or smaller than 0.2 $\mu$m, and particularly preferably equal to or smaller than 0.1 $\mu$m.

For the ten point average roughness (Rz), the mean width of the profile elements (RSm), and the arithmetic average roughness (Ra) of the surface 110 of the metal member according to the embodiment, the roughening treatment with respect to the surface 110 of the metal member is preferably performed by an electroless treatment, that is, a method not using electricity, and specifically performed by liquid chemical etching. In the embodiment, compared to an electrolytic treatment, in a case of performing the etching treatment using a chemical liquid, it is possible to realize low cost and mass production, because electrodes are not used. In order to set the Rz, RSm, and Ra in the specific ranges described above, the values thereof are controlled by suitably adjusting the composition of the liquid chemical or treatment conditions of the liquid chemical treatment, for example, a temperature or a time.

A metal material configuring the metal member 103 is not particularly limited, and examples thereof include iron, steel materials, stainless steel, aluminum, an aluminum alloy, magnesium, a magnesium alloy, copper, a copper alloy, zinc, a zinc alloy, tin, a tin alloy, titanium, and a titanium alloy. These may be used alone or in combination of two or more kinds thereof. Among these, from a viewpoint of a light weight and high strength, aluminum (aluminum single substance) and an aluminum alloy are preferable, and an aluminum alloy is more preferable.

As the aluminum alloy, alloy nos. 1050, 1100, 2014, 2024, 3003, 5052, 6063, 7075, and the like standardized by JIS H4000 are preferably used.

The shape of the metal member 103 is not particularly limited, as long as it can be bonded to the resin member 105, and examples thereof include a flat plate shape, a curved plate shape, a rod shape, a tube shape, or a lump shape. A structure obtained by combining these with each other may be used.

A shape of the bonding portion surface 104 to be bonded to the resin member 105 is not particularly limited, and a flat surface or a curved surface is used.

It is preferable that the metal member 103 is subjected to a roughening treatment which will be described later, after being processing to the predetermined shape, by removing processing such as plastic processing, punching processing, cutting, polishing, or electrical discharge machining performed by cutting or pressing of the metal material. That is, a member which is processed to a necessary shape by various processing methods is preferably used.

(Roughening treatment method of metal member surface)

Next, the roughening treatment method of the surface of the metal member 103 will be described.

The surface of the metal member 103 according to the embodiment can be formed, for example, by the roughening treatment using an etching agent.

Here, the roughening treatment of the surface of the metal member using the etching agent has been also performed in a technology of the related art. However, in the embodiment, factors such as the kind and a concentration of the etching agent, a temperature or a time of the roughening treatment, timing of the etching treatment, and the like are highly controlled. In order to obtain the bonding portion surface 104 of the metal member 103 according to the embodiment, it is important to highly control these factors.

Hereinafter, an example of the roughening treatment method of the metal member surface according to the embodiment is shown. However, the roughening treatment method of the metal member surface according to the embodiment is not limited to the following example.

(1) Pretreatment Step

First, it is desirable that the metal member 103 does not include a thick film formed of an oxide film or hydroxide on the surface on a side to be bonded to the resin member 105. In order to remove such a thick film, the surface layer may be polished by machine polishing such as sand blasting processing, shot blasting processing, grinding processing, and barrel processing, or chemical polishing, before the next step of performing the treatment by an etching agent. In a case where the surface on a side to be bonded to the resin member 105 is significantly contaminated by machine oil or the like, it is preferable to perform treatment by alkali aqueous solution such as a sodium hydroxide aqueous solution or a potassium hydroxide aqueous solution, or degreasing.

(2) Surface Roughening Treatment Step

As the surface roughening treatment method of the metal member in the embodiment, it is preferable to perform the treatment by an acid etching agent which will be described later at specific timing. Specifically, the treatment by an acid etching agent is preferably performed at a final stage of the surface roughening treatment step.

The surface roughening treatment of the metal member is preferably performed by an electroless treatment, that is, a method not using electricity, and specifically, by liquid chemical etching. In the embodiment, compared to an electrolytic treatment, in a case of performing the etching treatment using a chemical liquid, it is possible to realize low cost and mass production, because electrodes are not used. In order to set the Rz, RSm, and Ra in the specific ranges described above, the values thereof are controlled by suitably adjusting the composition of the liquid chemical or treatment conditions of the liquid chemical treatment, for example, a temperature or a time.

Patent Document 5 described above discloses an aspect using an alkali etching agent, an aspect using an alkali etching agent and an acid etching agent in combination, and an aspect of performing the treatment by an acid etching agent and then performing the washing with an alkali solution, as the etching agent used in the surface roughening treatment of the metal member formed of a metal material including aluminum.

A reaction of the alkali etching agent with respect to the metal member is mild, and thus, it is preferably used from a viewpoint of workability. However, according to the studies of the inventors, it is clear that, since reactivity of the alkali etching agent is mild, a degree of the roughening treatment of the surface of the metal member is weak, and it is difficult to form deep concavo-convex shape. In addition, it is clear that, in a case where an alkali etching agent or an alkali solution is used in combination after performing the treatment by the acid etching agent, a part of the concavo-convex shape may become smooth due to the latter treatment performed by the alkali etching agent or the alkali solution regarding the deep concavo-convex shape formed by the acid etching agent.

Accordingly, it is thought that, in the metal member treated by using the alkali etching agent, or the metal member obtained by using the alkali etching agent or the alkali solution in the final step of the etching treatment, it is difficult to hold the high bonding strength with the resin member formed of the resin composition.

As the method of the roughening treatment using the acid etching agent, a treatment method by dipping or spraying is used. A treatment temperature is preferably 20°C to 40°C, a treatment time is preferably 5 to 1,000 seconds, and from a viewpoint of more evenly roughening the surface of the metal member, the treatment time is preferably 20 to 850 seconds and particularly preferably 50 to 700 seconds.

The surface of the metal member 103 is roughened to have the concavo-convex shape, by the roughening treatment using the acid etching agent. In a case where the etching amount (dissolution amount) of the metal member 103 in a depth direction in a case of using the acid etching agent, is calculated from a mass, a specific gravity, and a surface area of the dissolved metal member 103, the etching amount is preferably equal to or smaller than 300 $\mu$m, more preferably equal to or smaller than 100 $\mu$m, and even more preferably equal to or smaller than 50 $\mu$m. It is preferable to increase the etching amount, from a viewpoint of the bonding strength, but by setting the etching amount to be equal to or smaller than the upper limit value, it is possible to prevent the amount of metal to be dissolved, the cost can be reduced, a dimensional change of the metal member 103 can also be prevented, and component design at a higher accuracy can be performed. That is, it is extremely important how to maintain the bonding strength while reducing the metal dissolving amount. The etching amount can be adjusted depending on the treatment temperature or the treatment time.

In addition, from a viewpoint of decreasing the amount of metal to be dissolved and reducing the cost, a metal loss $\Delta W$ (mg/cm$^2$) due to the etching obtained by substituting measurement values of masses (each, $W_0$ and $W_1$, unit [g]) of the metal member 103 before and after the roughening treatment using the etching agent (etching treatment) in Expression (2), is preferably equal to or smaller than 2.0 mg/cm$^2$, more preferably 1.8 mg/cm$^2$, and particularly preferably 1.6 mg/cm$^2$.

$$\Delta W = (W_0 - W_1) \times 1000/S \quad (2)$$

Here, S represents a surface area [cm$^2$] of the metal member.

In the embodiment, in a case of performing the roughening treatment of the metal member using the acid etching agent, the entire surface of the metal member surface may be roughened, or only the surface to be bonded to the resin member 105 may be partially roughened.

(3) Posttreatment Step

In the embodiment, after the surface roughening treatment step, normally, water washing and drying are preferably performed. The method of the water washing is not particularly limited, and washing is preferably performed by dipping or flowing of water for a predetermined time.

In addition, as the posttreatment step, an ultrasonic cleaning is preferably performed for removing smut generated due to the treatment using the acid etching agent. The condition of the ultrasonic cleaning is not particularly limited, as long it is a condition capable of removing the generated smut and the like, and water is preferable as a solvent used, and a treatment time is preferably 1 to 20 minutes.

As the cleaning step, the smut and the like may be removed by using acid or alkali liquid chemical. The acid and alkali liquid chemical used are not particularly limited, and nitric acid, hydrochloric acid, sulfuric acid, and sodium hydroxide are preferable, and the treatment time is preferably 30 seconds to 500 seconds.

(Acid Etching Agent)

In the embodiment, as the etching agent used for the roughening treatment of the metal member surface, a specific acid etching agent which will be described later is preferable. It is thought that, by performing the treatment by the specific etching agent, the concavo-convex shape suitable for improving adhesiveness with the resin member containing the resin composition (P), on the surface of the metal member, and the bonding strength between the metal member 103 and the resin member 105 is improved by the anchor effect.

Particularly, even from a viewpoint of improving the bonding strength with the resin member containing a polyolefin-based resin, a thermoplastic resin having a glass transition temperature equal to or higher than 140°C, or an amorphous thermoplastic resin, which is hardly bonded to the metal member in a normal treatment, or from a viewpoint of improving adhesive strength with a film formed of water paint which is hardly bonded to the metal member in a normal treatment, it is preferable to use the acid etching agent capable of forming a deeper concavo-convex shape on the surface of the metal member.

Hereinafter, the component of the acid etching agent which can be used in the embodiment will be described.

The acid etching agent is an aqueous solution or a water dispersion containing acid, metal salt (Q) represented by Formula (1), and if necessary, at least one of ferric ion and a cupric ion, manganese ion, and various additives. In the embodiment, the aqueous solution is defined as an aspect in which a solute is dissolved in an aqueous medium and the appearance thereof is transparent, and the water dispersion is defined as an aspect in which a particle diameter of a solute dispersed in a water medium is equal to or greater than 10 nm and the appearance thereof is semitransparent or suspension. The water dispersion also includes an aspect in which the solute is precipitated in a saturated state.

$$MX \quad (1)$$

In Formula (1), M represents a metal element in IA group, IIA group, IIIB group, or IVA group in the periodic table, and X represents fluorine atom, chlorine atom, bromine atom, or iodine atom) Here, the number of X is the same as the valence of M. In the embodiment, the group name of the periodic table is shown with the earlier IUPAC system.

In the embodiment, from a viewpoint of the bonding strength of the composite structure obtained by the bonding of the roughened metal surface and the resin member, and viewpoints of availability and safety, the metal element (M) represented by Formula (1) is preferably one or more kinds selected from Li, Na, K, Mg, Ca, Ba, and Al, and more preferably one or more kinds selected from Na, K, Mg, and Al. As the preferable metal salt (Q), $NaCl$, $MgCl_2$, $AlCl_3 \cdot H_2O$ can be exemplified.

The acid etching agent is an aqueous solution or a water dispersion containing at least one of ferric ion and a cupric ion, acid, the metal salt (Q) represented by Formula (1), and if necessary, manganese ion, and various additives.

• Ferric Ion

The ferric ion is a component which oxidizes the metal member, and the ferric ion can be contained in the acid etching agent by blending of a ferric ion source. Examples of the ferric ion source include ferric nitrate, ferric sulfate, and ferric chloride. Among the ferric ion sources, ferric chloride is preferable, from viewpoints of excellent solubility and low cost.

In the embodiment, a content of the ferric ion in the acid etching agent is preferably 0.01% to 20% by mass, more preferably 0.1% to 12% by mass, and even more preferably 0.5% to 7% by mass. In a case where the content of the ferric ion is equal to or greater than the lower limit value, it is possible to prevent a decrease in roughening speed (dissolving speed) of the metal member. Meanwhile, in a case where the content of the ferric ion is equal to or smaller than the upper limit value, it is possible to suitably maintain the roughening speed, and accordingly, the even roughening more suitable for improving the bonding strength between the metal member 103 and the resin member 105 can be realized.

• Cupric Ion

The cupric ion is a component which oxidizes the metal member, and the cupric ion can be contained in the acid etching agent by blending of a cupric ion source. Examples of the cupric ion source include cupric sulfate, cupric chloride, cupric nitrate, and cupric hydroxide. Among the cupric ion sources, cupric sulfate and cupric chloride are preferable, from a viewpoint of low cost.

In the embodiment, a content of the cupric ion in the acid etching agent is preferably 0.001% to 10% by mass, more preferably 0.01% to 7% by mass, and even more preferably 0.05% to 1% by mass. In a case where the content of the cupric ion is equal to or greater than the lower limit value, it is possible to prevent a decrease in roughening speed (dissolving speed) of the metal member. Meanwhile, in a case where the content of the cupric ion is equal to or smaller than the upper limit value, it is possible to suitably maintain the roughening speed, and accordingly, the even roughening more suitable for improving the bonding strength between the metal member 103 and the resin member 105 can be realized.

The acid etching agent may contain one or both of the ferric ion and cupric ion, and preferably contains both of the ferric ion and cupric ion. In a case where the acid etching agent contains both of the ferric ion and cupric ion agent, an excellent concavo-convex shape more suitable for improving the bonding strength between the metal member 103 and the resin member 105 is easily obtained.

In a case where the acid etching agent contains both of the ferric ion and the cupric ion, each content of the ferric ion and the cupric ion is preferably in the ranges described above. A total of the contents of the ferric ion and the cupric ion in the acid etching agent is preferably 0.011% to 20% by mass, more preferably 0.1% to 15% by mass, even more preferably 0.5% to 10% by mass, and particularly preferably 1% to 5% by mass.

The acid etching agent contains the metal salt (Q) represented by Formula (1), and a content thereof is preferably 5% to 40% by mass, and more preferably 10% to 35% by mass. The metal salt (Q) used in a case of preparing the acid etching agent may have an aspect of hydrate salt. In a case of the aspect of the hydrate salt, the amount of the component excluding crystal water is the content of the metal salt (Q). In the embodiment, the metal salt (Q) may have an aspect of an aqueous solution completely dissolved in the acid etching agent, and a part of the metal salt (Q) is in a saturated state and precipitated. In the embodiment, regarding % by mass which is the concentration of the metal salt (Q), a total amount of the dissolved amount and non-dissolved amount (precipitate) is defined as a concentration occupying the acid etching agent.

• Manganese Ion

The acid etching agent may contain manganese ion in order to evenly roughening the surface of the metal member without unevenness. The manganese ion can be contained in the acid etching agent by blending of a manganese ion source. Examples of the manganese ion source include manganese sulfate, manganese chloride, manganese acetate, manganese fluoride, and manganese nitrate. Among the manganese ion sources, manganese sulfate and manganese chloride are preferable, from a viewpoint of low cost.

In the embodiment, a content of the manganese ion in the acid etching agent is preferably 0% to 1% by mass and more preferably 0% to 0.5% by mass. The inventors have confirmed that, even in a case where the content of the manganese ion is 0% by mass, sufficient bonding strength can be realized, in a case where the resin composition (P) configuring the resin member 105 is a polyolefin-based resin. That is, in a case of using the polyolefin-based resin as the resin composition (P), the content of the manganese ion is preferably 0% by mass, and meanwhile, in a case of using a thermoplastic resin other than the polyolefin-based resin, the manganese ion having a content equal to or smaller than the upper limit value is suitably used.

• Acid

Examples of the acid include inorganic acid such as hydrochloric acid, hydrobromic acid, sulfuric acid, nitric acid, phosphoric acid, perchloric acid, or sulfamic acid, and organic acid such as sulfonic acid or carboxylic acid. Examples of the carboxylic acid include formic acid, acetic acid, citric acid, oxalic acid, and malic acid. In the acid etching agent, one kind or two or more kinds of these acids can be blended. Among the inorganic acids, sulfuric acid or hydrochloric acid is preferable, from a viewpoint of low cost. In addition, among the organic acids, carboxylic acid is preferable, from a viewpoint of evenness of the concavo-convex shape.

In the embodiment, a content of the acid in the acid etching agent is preferably 0.1% to 50% by mass, more preferably 0.5% to 50% by mass, even more preferably 1% to 50% by mass, still preferably 1% to 30% by mass, still more preferably 1% to 25% by mass, and still even more preferably 2% to 18% by mass. In a case where the content of the acid is equal to or greater than the lower limit value, it is possible to prevent a decrease in roughening speed (dissolving speed) of the metal. Meanwhile, in a case where the content of the acid is equal to or smaller than the upper limit value, the roughening speed is accurately controlled.

• Other Components

A surfactant may be added, and, if necessary, other additives may be added to the acid etching agent used in the embodiment, in order to prevent unevenness of the roughness due to contaminations of the surface such as fingerprint or the like. Examples of other additives include a halide ion source, for example, sodium chloride, potassium chloride, sodium bromide, or potassium bromide, added for forming deep concavo-convex. Alternatively, examples thereof include a thio compound such as thiosulfate ion or thiourea which is added for increasing the roughening treatment speed, azoles such as imidazole, triazole, or tetrazole which is added for obtaining more evenly roughened shape, and a pH adjuster which is added for controlling the roughening reaction. In a case of adding these other components, a total content thereof is preferably approximately 0.01% to 10% by mass in the acid etching agent.

The acid etching agent of the embodiment can be more easily prepared by dissolving each component described above in ion exchange water or the like.

<Resin Member>

Hereinafter, the resin member 105 according to the embodiment will be described.

The resin member 105 is formed of the resin composition (P). The resin composition (P) contains a resin (A) as a resin component, and if necessary, a filling material (B). The resin composition (P) further contains other compounding agents, if necessary. For convenience, even in a case where the resin member 105 is formed of only the resin (A), the resin member 105 is described to be formed of the resin composition (P).

(Resin (A))

The resin (A) is not particularly limited, and examples thereof include a polyolefin-based resin, a polymethacryl-based resin such as a polymethyl methacrylate resin, a polyacryl-based resin such as a polymethyl acrylate resin, a polystyrene resin, a polyvinyl alcohol-polyvinyl chloride copolymer resin, a polyvinyl acetal resin, a polyvinyl butyral resin, a polyvinyl formal resin, a polymethyl pentene resin, a maleic anhydride-styrene copolymer resin, a polycarbonate resin, a polyphenylene ether resin, aromatic polyether ketone such as a polyether ether ketone resin or a polyether ketone resin, a polyester-based resin, a polyamide-based resin, a polyamide imide resin, a polyimide resin, a polyether imide resin, a styrene-based elastomer, a polyolefin-based elastomer, a polyurethane-based elastomer, a polyester-based elastomer, a polyamide elastomer, an ionomer, an aminopolyacrylamide resin, an isobutylene maleic anhydride copolymer, ABS, ACS, AES, AS, ASA, MBS, an ethylene-vinyl chloride copolymer, an ethylene-vinyl acetate copolymer, an ethylene-vinyl acetate-vinyl chloride graft polymer, an ethylene-vinyl alcohol copolymer, a chlorinated polyvinyl chloride resin, a chlorinated polyethylene resin, a chlorinated polypropylene resin, a carboxyvinyl polymer, a ketone resin, an amorphous copolyester resin, a norbornene resin, fluoroplastic, a polytetrafluoroethylene resin, a fluorinated ethylene polypropylene resin, PFA, a polychlorofluoroethylene resin, an ethylene tetrafluoroethylene copolymer, a polyvinylidene fluoride resin, a polyvinyl fluoride resin, a polyarylate resin, a thermoplastic polyimide resin, a polyvinylidene chloride resin, a polyvinyl chloride resin, a polyvinyl acetate resin, a polysulfone resin, a polyparamethylstyrene resin, a polyallylamine resin, a polyvinyl ether resin, a polyphenylene oxide resin, a polyphenylene sulfide (PPS) resin, a polymethyl pentene resin, oligoester acrylate, a xylene resin, a maleic acid resin, a polyhydroxybutyrate resin, a polysulfone resin, a polylactic acid resin, a polyglutamic acid resin, a polycaprolactone resin, a polyethersulfone resin, a polyacrylonitrile resin, and a styrene-acrylonitrile copolymer resin. These thermoplastic resins may be used alone or in combination of two or more kinds thereof.

Among these, as the resin (A), one kind or two or more kinds of thermoplastic resins selected from a polyolefin-based resin, a polyester-based resin, a polyphenylene-based resin, and a polyamide-based resin is suitably used, from a viewpoint of more effectively obtaining an effect of improving bonding strength between the metal member 103 and the resin member 105.

As the polyolefin-based resin, a polymer obtained by polymerizing olefin can be used without particular limitation.

As olefin configuring the polyolefin-based resin, ethylene, $\alpha$-olefin, or cyclic olefin is used.

As the $\alpha$-olefin, linear or branched $\alpha$-olefin having 3 to 30 carbon atoms or preferably 3 to 20 carbon atoms is used. More specifically, examples thereof include propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene, and 1-eicosene.

As the cyclic olefin, cyclic olefin having 3 to 30 carbon atoms is used and the number of carbon atoms is preferably 3 to 20. More specifically, examples thereof include cyclopentene, cycloheptene, norbornene, 5-methyl-2-norbornene, tetracyclododecene, 2-methyl-1,4,5,8-dimethano-1,2,3,4,4a, 5,8,8a-octahydronaphthalene.

Preferable examples of olefin configuring the polyolefin-based resin include ethylene, propylene, 1-butene, 1-pentene, 3-methyl-1-butene, 1-hexene, 4-methyl-1-pentene, and 3-methyl-1-pentene. Among these, ethylene, propylene, 1-butene, 1-hexene, and 4-methyl-1-pentene are more preferably used and ethylene or propylene is even more preferably used.

The polyolefin-based resin may be obtained by polymerizing the olefin alone or may be obtained by combining two or more kinds with each other and performing a random copolymerization, a block copolymerization, or a graft copolymerization.

The polyolefin-based resin may have a linear or branched structure.

Examples of the polyester-based resin include an aliphatic polyester such as polylactic acid, polyglycolic acid, polycaprolactone, or polyethylene succinate, polyethylene terephthalate, polyethylene naphthalate, polybutylene terephthalate (PBT), and polycyclohexylenedimethylene terephthalate (PCT).

Examples of the polyamide-based resin include ring-opening polymerization type aliphatic polyamide such as PA6 or PA12; polycondensation type polyamide such as PA66, PA46, PA610, PA612, or PA11; semi-aromatic polyamide such as MXD6, PA6T, PA9T, PA6T/66, PA6T/6I, PA6I/66, PA6T/DT, PA6T/6, or Amorphous PA; whole aromatic polyamide such as poly (p-phenylene terephthalamide), poly (m-phenylene terephthalamide), or poly (m-phenylene isophthalamide), and an amide-based elastomer.

As the resin (A), one kind or two or more kinds of thermoplastic resins selected from thermoplastic resins having a glass transition temperature equal to or higher than 140°C and amorphous thermoplastic resins is suitably used, from a viewpoint of more effectively obtaining an effect of improving bonding strength between the metal member 103 and the resin member 105.

Examples of the thermoplastic resin having a glass transition temperature equal to or higher than 140°C include one kind or two or more kinds selected from aromatic polyether ketone such as a polyetheretherketone resin, or a polyetherketone resin, a polyimide resin, a polyphenylsulfone resin, and a polyethersulfone resin.

Examples of the amorphous thermoplastic resin include one kind or two or more kinds selected from a polystyrene resin, a polyacrylonitrile resin, a styrene-acrylonitrile copolymer resin, an acrylonitrile-butadiene-styrene copolymer resin (ABS resin), a polymethylmethacrylate resin, and a polycarbonate resin.

As the resin (A), a thermoplastic elastomer may be used.

Examples of the thermoplastic elastomer include one kind or two or more kinds selected from a polyolefin-based elastomer, a polyurethane-based elastomer, a polystyrene-based elastomer, and a polyester-based elastomer.

The resin (A) may be a thermosetting resin, and as a resin composition containing the thermosetting resin, a long fiber reinforced composite structure or a continuous fiber reinforced composite structure obtained by solidifying a long fiber or a continuous fiber formed of glass or carbon with a thermosetting resin is used, and for example, fiber sheet · molding · compound (SMC), carbon fiber reinforced plastic (CFRP), or glass fiber reinforced plastic (GFRP) is also included. The thermosetting resin is not particularly limited and examples thereof include an unsaturated polyester-based resin and an epoxy-based resin.


(Filling Material (B))

The resin composition may further contain the filling material (B), from viewpoints of adjustment of a difference in coefficients of linear expansion between the metal member 103 and the resin member 105 or improvement of mechanical strength of the resin member 105.

Examples of the filling material (B) include one kind or two or more kinds from the group consisting of a glass fiber, a carbon fiber, a metal fiber, an organic fiber such as an aramid fiber, carbon particles, clay, talc, silica, mineral, calcium carbonate, magnesium carbonate, and a cellulose fiber. Among these, one kind or two or more kinds selected from a glass fiber, a carbon fiber, talc, and mineral are preferable.

The shape of the filling material (B) is not particularly limited and may be any shape of a fiber, particles, and a plate.

The filling material (B) preferably contains 5% to 100% of a filling material having a maximum length equal to or greater than 10 nm and equal to or smaller than 600 $\mu$m, in terms of number fraction. The maximum length is more preferably equal to or greater than 30 nm and equal to or smaller than 550 $\mu$m and even more preferably equal to or greater than 50 nm and equal to or smaller than 500 $\mu$m. In addition, the number fraction of the filling material (B) having the maximum length in the range described above is preferably 10% to 100% and more preferably 20% to 100%.

In a case where the maximum length of the filling material (B) is in the range described above, the filling material (B) can easily move in the resin composition (P) melted during the molding of the resin composition (P), and accordingly, in a case of manufacturing the metal-resin composite structure 106 which will be described later, a certain percentage of filling material (B) can also be present in the vicinity of the metal member surface. Accordingly, as described above, by causing the resin interacting with the filling material (B) to penetrate the concavo-convex shape of the metal member surface, it is possible to maintain stronger bonding strength.

In addition, in a case where the number fraction of the filling material (B) is in the range described above, the number of filling material (B) sufficient to be operated with the concavo-convex shape of the surface of the metal member 103 is present in the resin composition (P).

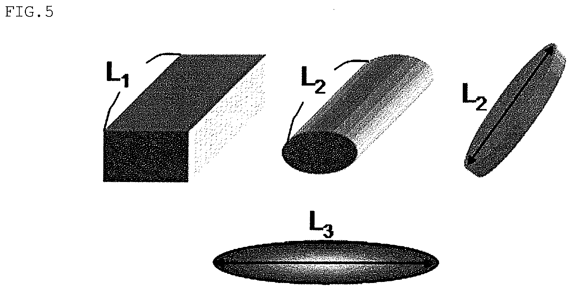

The length of the filling material (B) is obtained by removing a member formed of the resin composition (P) from the metal-resin composite structure 106 to be obtained, heating the resin composition (P) in an oven for complete carbonization, removing the carbonized resin, and performing the measurement regarding the remaining filling material (B) with a scanning electron microscope. Here, as shown with $L_1$ to $L_3$ in the schematic views of Fig. 5, in a case of a rectangular shape, the maximum length of the filling material (B) is set as a maximum length $L_1$ among three sides, in a case of a tubular shape, the maximum length thereof is set as a length $L_2$ which is a longer length among a length of a diameter of a circle on a long axis side and a height of the tube, and in a case of a sphere or a spheroid, the maximum length thereof is set as a length $L_3$ which is the longest diameter, in a case of measuring a length of the diameter of the cross section on the long axis side.

The number fraction of the filling material (B) is obtained by counting the number of all of filling materials (B) appeared on the electron microscopic image used for measurement of the length of the filling material (B), and calculating the number of filling materials (B) included in the range described above.

The filling material (B) may be one kind or two or more kinds, and in a case of using two or more kinds thereof, the maximum length is obtained with all kinds of the filling materials (B) by the method described above.

The filling material (B) may be a filling material having the maximum length exceeding 600 $\mu$m in a stage before kneading with the resin composition (P), and the maximum length may be in the range described above by cutting or pulverizing during the kneading or molding.

In a case where the resin composition (P) contains the filling material (B), a content thereof is preferably equal to or greater than 1 parts by mass and equal to or smaller than 100 parts by mass, more preferably equal to or greater than 5 parts by mass and equal to or smaller than 90 parts by mass, and particularly preferably equal to or greater than 10 parts by mass and equal to or smaller than 80 parts by mass, with respect to 100 parts by mass of the resin composition (P).

The filling material (B) has an effect of controlling a coefficient of linear expansion of the resin member 105, in addition to an effect of increasing rigidity of the resin member 105. Particularly, in a case of a composite of the metal member 103 and the resin member 105 of the embodiment, temperature dependency of morphological stability is greatly different between the metal member 103 and the resin member 105, in many cases, and thus, in a case where a great temperature change occurs, a strain easily occurs in the composite. By containing the filling material (B) in the resin member 105, it is possible to decrease the strain. By setting the content of the filling material (B) to be in the range described above, it is possible to prevent a decrease in toughness.

(Other Compounding Agents)

The resin composition (P) may contain other compounding agents, in order to impart various functions.
Examples of the compounding agent include a heat stabilizer, an antioxidant, a pigment, a weathering agent, a flame retardant, a plasticizer, a dispersant, a lubricant, a release agent, an antistatic agent, and a shock resistance modifying agent.

(Preparation Method of Resin Composition (P))

The preparation method of the resin composition (P) is not particularly limited, and normally, the resin composition can be prepared by a well-known method. For example, the following method is used. First, the resin (A), if necessary, the filling material (B), and if necessary, other compounding agents are mixed or melt-mixed by using a mixing device such as a Banbury mixer, a single screw extruder, a twin-screw extruder, or a high-speed twin-screw extruder, and thereby obtaining the resin composition (P).

[Manufacturing Method of Metal-Resin Composite Structure]

Next, the manufacturing method of the metal-resin composite structure 106 according to the embodiment will be described.
The manufacturing method of the metal-resin composite structure 106 is not particularly limited, and the metal-resin composite structure is obtained by bonding the resin composition (P) to the metal member 103 subjected to the surface roughening treatment, while performing the molding, so as to obtain the desired shape of the resin member 105.
Examples of the molding method of the resin member 105 include resin molding methods such as injection molding, extrusion molding, heat press molding, compression molding, transfer molding, cast molding, laser welding molding, reaction injection molding (RIM molding), LIM molding, or spray forming.
Among these, as the manufacturing method of the metal-resin composite structure 106, the injection molding method is preferable, and specifically, the metal-resin composite structure is preferably manufactured by the injection molding method of inserting the metal member 103 to a cavity portion of an injection molding die and injecting the resin composition (P) to the die. Specifically, a method including the followings steps (i) and (ii) is preferable.

(i) step of installing the metal member 103 in a die for injection molding
(ii) step of performing the injection molding of the resin composition (P) in the mold so as to be in contact with at least a part of the metal member 103 to form the resin member 105

Hereinafter, the injection molding method with the steps (i) and (ii) will be described.
First, a die for injection molding is prepared, the die is opened, and the metal member 103 is installed in a part thereof. Then, the die is closed, the resin composition (P) is injected and solidified in the die, so that at least a part of the resin composition (P) is in contact with a surface of the metal member 103 on which the concavo-convex shape is formed. After that, by opening and releasing the die, the metal-resin composite structure 106 can be obtained.
With the injection molding with the steps (i) and (ii) described above, injection foam molding or rapid heat cycle molding (RHCM, heating and cooling molding) of rapidly heating and cooling the die may be used in combination.
Examples of the method of the injection foam molding include a method of adding a chemical foaming agent to a resin, a method of directly injecting nitrogen gas or carbon dioxide gas to a part of a cylinder of an injection molding machine, and a MuCell injection foam molding method of injecting nitrogen gas or carbon dioxide gas to a part of a cylinder of an injection molding machine in a supercritical state, and a metal-resin composite structure in which the resin member is a foam body can be obtained by any method. In any method, counter pressure can be used or a core back can be used according to a shape of a molded object, as a controlling method of the die.

The rapid heat cycle molding can be performed by connecting a rapid heating and cooling device to the die. The rapid heating and cooling device may be operated by a method generally used. A heating method may be any one method of a steam method, a pressurized hydrothermal method, a hydrothermal method, a hot oil method, an electric heater method, and an electromagnetic induction overheating method, or a combined method of the plural methods.

The cooling method may be any one method of a cold water method and a cold oil method, or a combined method thereof. As the conditions of the rapid heat cycle molding method, for example, it is desirable that the injection molding die is heated to a temperature equal to or higher than 100°C and equal to or lower than 280°C, the injection of the resin composition (P) is completed, and the injection molding die is cooled. The preferred range of the temperature for heating the die is different depending on the resin composition (P). In a case where the resin is a crystalline resin and is a resin having a melting point lower than 200°C, the temperature is preferably equal to or higher than 100°C and equal to or lower than 150°C, and in a case where the resin is a crystalline resin and is a resin having a melting point equal to or higher than 200°C, the temperature is preferably equal to or higher than 140°C and equal to or lower than 250°C. The temperature regarding the amorphous resin is desirably equal to or higher than 50°C and equal to or lower than 270°C and more desirably equal to or higher than 100°C and equal to or lower than 250°C.

[Use for Metal-Resin Composite Structure]

The metal-resin composite structure 106 according to the embodiment has high productivity and a high degree of freedom of shape controlling, and can be expanded to various uses.

The metal-resin composite structure 106 according to the embodiment exhibits high airtightness and watertightness, and accordingly, the metal-resin composite structure is suitably used for the purpose according to these properties.

Examples thereof include structural components for a car, car-mounted components, a housing of an electronic device, a housing of an household electrical appliance, structural components, mechanical components, components for various vehicles, components for an electronic device, the purpose for household goods such as furniture, or kitchenware, medical equipment, components of construction materials, other structural components or exterior components.

More specifically, examples thereof include the following components which are designed so that a portion having insufficient strength just with the resin, is supported by the metal. In vehicles, an instrument panel, a console box, door knobs, door trim, a shift lever, pedals, a glove box, a bumper, a hood, fenders, a trunk, doors, a roof, a pillar, seats, a radiator, an oil pan, a steering wheel, an ECU box, and electrical parts are used. In construction or household goods, glass window frames, handrails, curtain rail, a chest of drawers, and drawer, closet, a bookshelf, a desk, and a chair are used. A connector, a relay, and gears are used as precise electronic components. A transport container, a suitcase, and a trunk are used as transportation containers.

The composite structure can be used for a component used in a machine designed to have optimal heat management by combining thermal conductivity of the metal member 103 and the heat insulating properties of the resin composition (P), for example, and various electric appliances. Household appliances such as a refrigerator, a washing machine, a vacuum cleaner, a microwave oven, an air conditioner, lighting equipment, an electric kettle, a TV, a clock, a ventilating fan, a projector, and speakers, and electronic information devices such as a computer, a mobile phone, a smart phone, a digital camera, a tablet PC, a portable music player, a portable game machine, a charger, and a battery are used.

In regards to this, by roughening the surface of the metal member 103, the surface area is increased, and thus, a contact surface area between the metal member 103 and the resin member 105 is increased and heat resistance of a contact interface can be reduced.

For other uses, toys, sports equipment, shoes, sandals, bags, tableware such as forks, knifes, spoons, and dishes, stationery such as a ball pen or a pacer, a file, and a binder, cookware such as a pan or a pot, a kettle, a spatula, a ladle, a perforated ladle, a whisk, and a tong, components for lithium ion secondary battery, and a robot are used.

Hereinabove, the usage of the metal-resin composite structure of the invention has been described, but these are examples of the usage of the invention and various other configurations can be used.

Hereinabove, the embodiments of the invention have been described, but these are merely examples of the invention and various other configurations can be used.

[Examples]

Hereinafter, the embodiments will be described in detail with reference to examples and comparative examples. The embodiments are not limited to these examples.

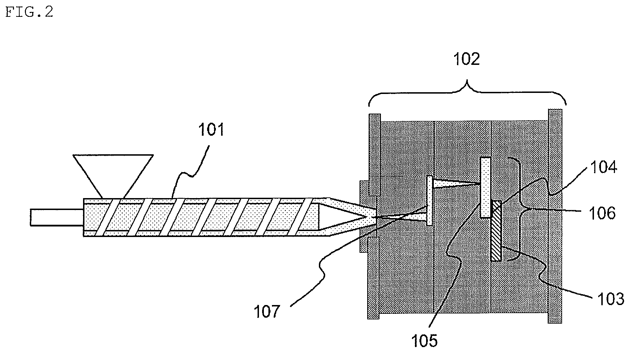

Figs. 1 and 2 are used as a common drawing of each example.

Fig. 1 is an outline view schematically showing an example of a structure of the metal-resin composite structure 106 formed of the metal member 103 and the resin member 105.

Fig. 2 is a configuration view schematically showing a process of manufacturing the metal-resin composite structure 106 formed of the metal member 103 and the resin member 105. Specifically, Fig. 2 schematically shows a process of performing the processing to a predetermined shape, and installing the metal member 103 having a surface on which the bonding portion surface (surface treatment region) 104 having fine concavo-convex surface is formed, in a die 102 for injection molding, injecting the resin composition (P) through a gate/runner 107 by an injection molding machine 101, and manufacturing the metal-resin composite structure 106 integrally formed with the metal member 103 on which the fine concavo-convex surface is formed.

(Measurement of Ten Point Average Roughness (Rz), Mean width of the profile elements (RSm), and Arithmetic Average Roughness (Ra) of Metal Member Surface)

Among surface roughnesses measured based on JIS B0601 (corresponding ISO4287) by using a surface roughness measurement device "SURFCOM 1400D (manufactured by Tokyo Seimitsu Co., Ltd.)", the ten point average roughness (Rz), mean width of the profile elements (RSm), and arithmetic average roughness (Ra) were measured. The measurement conditions are as follows.

- Probe tip radius: 5 $\mu$m
- Reference length: 0.8 mm
- Evaluated length: 4 mm
- Measurement speed: 0.06 mm/sec

The measurement was performed regarding six linear portions in total including three arbitrary linear portions parallel with each other and another three arbitrary linear portions perpendicular to the above linear portions on the surface of the metal member (see Fig. 4).

The evenness of the roughness can also be determined from an optical microscopic image of the roughened surface, in addition to the determination performed from a coefficient of variation of the measurement values of the six points in total statistically, used in the example.

In the examples and the comparative examples, it is understood that, since the roughening treatment is performed with respect to the entire surface of the metal member 103, the same evaluation result as that of the measurement portions shown in Fig. 4 is obtained, even in a case where the measurement of the ten point average roughness (Rz), mean width of the profile elements (RSm), and arithmetic average roughness (Ra) is performed regarding the bonding portion surface 104 of the metal-resin composite structure 106.

(Evaluation Method of Bonding Strength)

The measurement was performed using a tensile strength tester "model 1323 (manufactured by Aikoh Engineering Co., Ltd.)" and attaching a dedicated jig to the tensile strength tester, under conditions of room temperature (23°C), a distance between chucks of 60 mm, and a tensile rate of 10 mm/min. The bonding strength (MPa) was obtained by dividing a breaking weight (N) by an area of the metal-resin bonded portion.

(Fracture Morphology Observation)

The aluminum side after the tensile test was observed, and in a case where the resin remains on the boundary of the metal-resin bonded portion, material fracture was performed. In a case where the resin remains on only a part of the boundary, partial material fracture is performed, and this indicates that the bonding strength is insufficient.

(Surface Roughening Treatment A of Metal Member)

[Preparation Example 1]

(Surface Roughening Treatment Using Acid Etching Agent 1)

An aluminum plate (thickness: 2.0 mm) of alloy no. 6063 standardized based on JIS H4000 was cut to have a length of 45 mm and a width of 18 mm. This aluminum plate is dipped and swung in an acid etching agent 1 (30°C) having a composition shown in Table 1 for 600 seconds for etching. Then, ultrasonic cleaning (in water, 1 minute) was performed by water flowing, drying was performed, and accordingly, a metal member subjected to the surface treatment was obtained.

The surface roughness of the obtained metal member subjected to the surface treatment was measured using a surface roughness measurement device "SURFCOM 1400D (manufactured by Tokyo Seimitsu Co., Ltd.)", and the ten point average roughness (Rz), the mean width of the profile elements (RSm), and the arithmetic average roughness (Ra) of the six linear portions were obtained. The result is shown in Table 2. In the table, the metal loss $\Delta W$ (mg/cm$^2$) due to the etching obtained by substituting measurement values of masses (each, Wo and $W_1$, unit [g]) of the metal member before and after the etching treatment in Expression (2) is also shown.

$$\Delta W = (W_0 - W_1) \times 1000/S \quad (2)$$

Here, S represents a surface area [cm$^2$] of the metal member 103.

[Preparation Example 2]

(Surface Roughening Treatment Using Acid Etching Agent 2)

The same treatment was performed as that in the preparation example 1, except for that the etching was performed for 300 seconds by changing the acid etching agent 1 to an acid etching agent 2 shown in Table 1, and a metal member subjected to surface treatment was obtained.
The Rz, RSm, Ra, and the metal loss of the obtained metal member subjected to the surface treatment are shown in Table 2.

[Preparation Example 3]

(Surface Roughening Treatment Using Acid Etching Agent 3)

The same treatment was performed as that in the preparation example 1, except for that etching was performed for 400 seconds by changing the acid etching agent 1 to an acid etching agent 3 shown in Table 1, and a metal member subjected to surface treatment was obtained.
The Rz, RSm, Ra, and the metal loss of the obtained metal member subjected to the surface treatment are shown in Table 2.

[Preparation Example 4]

(Surface Roughening Treatment by Anodic Oxidation)

The roughening treatment was performed based on a method disclosed in the example of Japanese Patent No. 4541153. That is, the aluminum plate used in the preparation example 1 was set as an anode side of a phosphoric acid bath formed of a phosphoric acid aqueous solution having a concentration of 30% by mass at a liquid temperature of approximately 25°C, the electrolysis is performed by a direct current method at a voltage of approximately 50 V, and a current density of approximately 0.5 to 1 A/dm$^2$ for 20 minutes, to form an anodic oxidation film. The Rz, RSm, Ra, and the metal loss of the obtained metal member subjected to the surface treatment are shown in Table 2.

[Preparation Example 5]

(Surface Roughening Treatment by NMT Method)

The roughening treatment was performed based on a treatment method disclosed in Example 1 of JP-A-2005-119005. That is, a commercially available aluminum degreasing agent "NE-6 (manufactured by Meltex Inc.)" was dissolved in water at a concentration of 15% and the temperature thereof was set to 75°C. The aluminum plate used in the preparation example 1 was dip and in an aluminum degreasing bath containing this aqueous solution for 5 minutes and washed with water, and dipped in a hydrochloric acid aqueous solution having a concentration of 1% at 40°C, for 1 minute and washed with water. Next, the aluminum plate was dipped in a bath containing a sodium hydroxide aqueous solution having a concentration of 1% at 40°C, for 1 minute and washed with water. Then, the aluminum plate was dipped in a bath containing a hydrochloric acid aqueous solution having a concentration of 1% at 40°C, for 1 minute and washed with water, dipped in a first hydrazine treatment bath containing 1 hydrated hydrazine aqueous solution having a concentration of 2.5% at 60°C for 1 minute, and dipped in a second hydrazine treatment bath containing 1 hydrated hydrazine aqueous solution having a concentration of 0.5% at 40°C for 0.5 minutes and washed with water. This was dried with hot air at 40°C for 15 minutes and at 60°C for 5 minutes, and accordingly a metal member subjected to the surface treatment was obtained. The Rz, RSm, Ra, and the metal loss of the obtained metal member subjected to the surface treatment are shown in Table 2.

[Preparation Example 6]

(Surface Roughening Treatment by Using Acid Etching Agent 4)

The same treatment was performed as that in the preparation example 1, except for that the etching was performed for 250 seconds by changing the acid etching agent 1 to an acid etching agent 4 shown in Table 1, and a metal member subjected to surface treatment was obtained.
The Rz, RSm, Ra, and the metal loss of the obtained metal member subjected to the surface treatment are shown in Table 2.

[Preparation Example 7]

(Surface Roughening Treatment Using Acid Etching Agent 5)

The same treatment was performed as that in the preparation example 1, except for that etching was performed for 200 seconds by changing the acid etching agent 1 to an acid etching agent 5 shown in Table 1, and a metal member subjected to surface treatment was obtained.
The Rz, RSm, Ra, and the metal loss of the obtained metal member subjected to the surface treatment are shown in Table 3.

[Preparation Example 8]

(Surface Roughening Treatment Using Acid Etching Agent 6)

The same treatment was performed as that in the preparation example 1, except for that etching was performed for 150 seconds by changing the acid etching agent 1 to an acid etching agent 6 shown in Table 1, and a metal member subjected to surface treatment was obtained.
The Rz, RSm, Ra, and the metal loss of the obtained metal member subjected to the surface treatment are shown in Table 3.

[Preparation Example 9]

(Surface Roughening Treatment Using Acid Etching Agent 7)

The same treatment was performed as that in the preparation example 1, except for that etching was performed for 100 seconds by changing the acid etching agent 1 to an acid etching agent 7 shown in Table 1, and a metal member subjected to surface treatment was obtained.
The Rz, RSm, Ra, and the metal loss of the obtained metal member subjected to the surface treatment are shown in Table 3.

[Preparation Example 10]

(Surface Roughening Treatment Using Acid Etching Agent 8)

The same treatment was performed as that in the preparation example 1, except for that etching was performed for 250 seconds by changing the acid etching agent 1 to an acid etching agent 8 shown in Table 1, and a metal member subjected to surface treatment was obtained.
The Rz, RSm, Ra, and the metal loss of the obtained metal member subjected to the surface treatment are shown in Table 3.

[Preparation Example 11]

(Surface Roughening Treatment Using Acid Etching Agent 9)

The same treatment was performed as that in the preparation example 1, except for that etching was performed for 600 seconds by changing the acid etching agent 1 to an acid etching agent 9 shown in Table 1, and a metal member subjected to surface treatment was obtained.

The Rz, RSm, Ra, and the metal loss of the obtained metal member subjected to the surface treatment are shown in Table 3.

[Preparation Example 12]

(Surface Roughening Treatment Using Acid Etching Agent 10)

The same treatment was performed as that in the preparation example 1, except for that etching was performed for 250 seconds by changing the acid etching agent 1 to an acid etching agent 10 shown in Table 1, and a metal member subjected to surface treatment was obtained.

The Rz, RSm, Ra, and the metal loss of the obtained metal member subjected to the surface treatment are shown in Table 3.

[Table 1]

| | Acid etching agent (Number and component composition) | | | | | | | | | |
|---|---|---|---|---|---|---|---|---|---|---|
| | 1 | 2 | 3 | 4 | 5 | 6 | 7 | 8 | 9 | 10 |
| Sulfuric acid | 2.1wt% | 4.1wt% | | 2.1wt% | 3.1wt% | 4.1wt% | 6.2wt% | | | 2.1wt% |
| Hydrochloric acid | | | 1.5wt% | | | | | 1.5wt% | 6.0wt% | |
| Ferric chloride | 2.0wt% | 3.9wt% | 2.0wt% | 2.0wt% | 2.0wt% | 3.9wt% | 3.9wt% | 2.0wt% | | 2.0wt% |
| Cupric chloride | 0.1wt% | 0.2wt% | 0.1wt% | 0.1wt% | 0.1wt% | 0.2wt% | 0.2wt% | 0.1wt% | | 0.1wt% |
| Metal salt (Q) * | Not contained | Not contained | Not contained | (Q-1) | (Q-1) | (Q-1) | (Q-1) | (Q-1) | (Q-1) | (Q-2) |
| | | | | 32wt% | 32wt% | 32wt% | 32wt% | 32wt% | 32wt% | 28wt% |
| Ion exchange water | Balance | Balance | Balance | Balance | Balance | Balance | Balance | Balance | Balance | Balance |
| *) (Q-1):AlCl$_3$.6H$_2$O, (Q-2):NaCl | | | | | | | | | | |

[Table 2]

| | | | Preparation Example 1 | Preparation Example 2 | Preparation Example 3 | Preparation Example 4 | Preparation Example 5 | Preparation Example 6 |
|---|---|---|---|---|---|---|---|---|
| Etching method | | | Acid etching agent 1 | Acid etching agent 2 | Acid etching agent 3 | Anodic oxidation method | NMT method | Acid etching agent 4 |
| Rz [$\mu$m] | Measurement values of six linear portions | (Lengthwise) (Short) | 17.6, 7.2, 13.2 10.9, 22.5, 13.9 | 20.1, 20.6, 21.8 23.5, 22.4, 22.5 | 15.5, 12.3, 18.5 11.5, 17.5, 22.1 | 7.5, 7.3, 6.4 7.1, 7.8, 7.9 | 1.3, 1.2, 1.4 1.2, 1.2, 1.3 | 3.3, 3.1, 3.3 3.4, 3.4, 3.4 |
| | Average value (m) | | 14.2 | 21.8 | 16.2 | 7.3 | 1.3 | 3.3 |
| | Standard deviation ($\sigma$) | | 5.3 | 1.3 | 4 | 0.5 | 0.1 | 0.1 |
| | Coefficient of variation [($\sigma$/m) x 100%] | | 38 | 6 | 25 | 7 | 8 | 3 |
| RSm [$\mu$m] | Measurement values of six linear portions | (Lengthwise) (Short) | 370, 237, 263 315, 467, 411 | 269, 322, 367 282, 325, 283 | 320, 368, 285 340, 326, 276 | 213, 115, 103 122, 127, 135 | 99, 104, 88 79, 88, 98 | 65.8, 71.1, 65.8 64.0, 74.3, 62.2 |
| | Average value (m) | | 344 | 308 | 319.2 | 136 | 93 | 67.2 |
| | Standard deviation ($\sigma$) | | 88.5 | 37.1 | 34.3 | 39.3 | 9.2 | 4.6 |
| | Coefficient of variation [($\sigma$/m) x 100%] | | 26 | 12 | 11 | 29 | 10 | 7 |
| Ra [$\mu$m] | Measurement values of six linear portions | (Lengthwise) (Short) | 2.3, 1.2, 1.5 1.6, 2.1, 2.2 | 6.0, 6.2, 6.7 6.5, 7.2, 6.7 | 3.5, 3.0, 2.8 2.7, 2.1, 3.2 | 1.8, 1.9, 1.5 1.8, 1.9, 2.1 | 0.2, 0.2, 0.2 0.2, 0.2, 0.3 | 0.7, 0.6, 0.7 0.7, 0.7, 0.7 |
| | Average value (m) | | 1.8 | 6.5 | 2.9 | 1.8 | 0.2 | 0.7 |
| | Standard deviation ($\sigma$) | | 0.4 | 0.4 | 0.5 | 0.2 | 0.04 | 0.03 |
| | Coefficient of variation [($\sigma$/m) x 100%] | | 22 | 6 | 17 | 11 | 20 | 4 |
| $\Delta$W[mg/cm$^2$] | | | 2.2 | 6.7 | 3.8 | 0.8 | 1.1 | 0.7 |

[Table 3]

| | | | Preparation Example 7 | Preparation Example 8 | Preparation Example 9 | Preparation Example 10 | Preparation Example 11 | Preparation Example 12 |
|---|---|---|---|---|---|---|---|---|
| | Etching method | | Acid etching agent 5 | Acid etching agent 6 | Acid etching agent 7 | Acid etching agent 8 | Acid etching agent 9 | Acid etching agent 10 |
| Rz [μm] | Measurement values of six linear portions | (Lengthwise) (Short) | 3.7, 3.8, 3.8 3.8, 4.3, 4.3 | 5.2, 5.5, 5.1 5.2, 5.5, 5.1 | 8.5, 8.7, 8.8 9.0, 8.6, 8.2 | 7.5, 7.3, 6.4 7.1, 7.8, 7.9 | 2.5, 2.3, 2.5 2.5, 2.5, 2.3 | 3.4, 3.5, 3.2 3.5, 3.1, 3.1 |
| | Average value (m) | | 3.9 | 5.3 | 8.6 | 7.3 | 2.4 | 3.3 |
| | Standard deviation (σ) | | 0.3 | 0.19 | 0.3 | 0.5 | 0.1 | 0.2 |
| | Coefficient of variation [(σ/m) x 100%] | | 8 | 4 | 3 | 7 | 4 | 6 |
| RSm [μm] | Measurement values of six linear portions | (Lengthwise) (Short) | 55.9, 48.3, 51.7 49.0, 62.1, 62.1 | 65.2, 62.1, 64.5 63.2, 70.1, 65.5 | 74.8, 84.4, 68.0 77.9, 75.1, 77.6 | 72.2, 69.5, 75.5 68.5, 65.7, 70.5 | 52.5, 49.5, 55.5 51, 4, 56.3, 50.1 | 69.2, 73.0, 74.2 66.8, 64.4, 75.1 |
| | Average value (m) | | 54.9 | 65.1 | 76.3 | 70.3 | 52.6 | 70.5 |
| | Standard deviation (σ) | | 6.2 | 2.76 | 5.3 | 3.3 | 2.8 | 4.3 |
| | Coefficient of variation [(σ/m) x 100%] | | 11 | 4 | 7 | 5 | 5 | 6 |
| Ra [μm] | Measurement values of six linear portions | (Lengthwise) (Short) | 0.7, 0.7, 0.7 0.6, 0.7, 0.7 | 1.5, 1.4, 1.3 1.4, 1.6, 1.5 | 1.9, 1.8, 1.8 2.0, 1.9, 1.8 | 1.7, 1.6, 1.7 1.8, 1.6, 1.8 | 0.7, 0.6, 0.6 0.5, 0.6, 0.6 | 0.6, 0.6, 0.8 0.7, 0.6, 0.6 |
| | Average value (m) | | 0.7 | 1.5 | 1.9 | 1.7 | 0.6 | 0.7 |
| | Standard deviation (σ) | | 0.05 | 0.1 | 0.1 | 0.09 | 0.06 | 0.1 |
| | Coefficient of variation [(σ/m) x 100%] | | 7 | 7 | 5 | 5 | 10 | 14 |
| | ΔW[mg/cm²] | | 1.1 | 1.6 | 2.0 | 1.8 | 1.0 | 0.8 |

EP 3 466 674 A1

22

As clearly shown from Tables 2 and 3, by containing the metal salt (Q) represented by Formula (1) in the acid etching agent, each measurement value of the ten point average roughnesses (Rz), the mean width of the profile elements (RSm), and the arithmetic average roughness (Ra) which are items obtained by setting the six arbitrary linear portions of the roughened metal surface as measurement targets by the surface roughness measurement device is in the specific ranges regulated in the embodiment and the coefficient of variation of the measurement values of the six points significantly shows a decreasing tendency. That is, by setting the Rz, RSm, and preferably Ra which are roughness parameters of the metal surface to be in the specific ranges regulated in the embodiment, the excellent bonding strength between the roughened metal and various resin compositions is exhibited, and a roughened shape pattern is even over the entire roughened surface. Accordingly, it is expected to contribute to a decrease of the variation in adhesiveness between the resin and the metal of the composite structure. In addition, it is also possible to reduce the amount of metal to be lost due to the etching, and therefore, it is possible to effectively obtain high strength and stable bonding by a low environmental impact process.

[Examples 1 to 6]

A small-sized dumbbell metal insert die 102 was mounted on J85AD110H manufactured by The Japan Steel Works, LTD. and each aluminum plate (metal member 103) shown in Table 4 was installed in the die 102. Then, the injection molding of a PBT resin manufactured by Polyplastics Co., Ltd. (DURANEX 930HL) as the resin composition (P) was performed in the die 102 under the conditions of a cylinder temperature of 280°C, a die temperature of 150°C, an injection speed of 25 mm/sec, holding pressure of 80 MPa, and a holding time of 10 seconds, and each of the metal-resin composite structure 106 was obtained. The evaluation result of the bonding strength is shown in Table 4.

[Examples 7 and 8]

Each of the metal-resin composite structure 106 was obtained in the same manner as in Examples 1 to 6, except for that the aluminum plate was changed as the aluminum plate shown in Table 4, the resin composition (P) was changed to a PP resin (V7100) manufactured by Prime Polymer Co., Ltd., and the injection molding conditions were changed to have the cylinder temperature of 250°C and the die temperature of 120°C. The evaluation result of the bonding strength is shown in Table 4.

[Examples 9 and 10]

The small-sized dumbbell metal insert die 102 was mounted on J85AD110H manufactured by The Japan Steel Works, LTD. and each aluminum plate (metal member 103) shown in Table 4 was installed in the die 102. The temperature of the surface of the die 102 connected to a die temperature adjustment device for rapid heat cycle molding (ATT H2 manufactured by Single Co., Ltd.) was heated to 155°C using a pressurized hot water which is a heating medium. Then, the injection molding of a PC resin (PANLITE L1225L manufactured by TEIJIN LIMITED.) as the resin composition (P) was performed in the die 102 under the conditions having the cylinder temperature of 320°C, the injection speed of 25 mm/sec, the holding pressure of 100 MPa, and the holding time of 15 seconds, and the temperature of the surface of the die 102 is rapidly cooled to 60°C with water which is a cooling medium, and each metal-resin composite structure 106 was obtained. The evaluation result of the bonding strength is shown in Table 4.

[Examples 11 and 12]

Each of the metal-resin composite structure 106 was obtained in the same manner as in Examples 1 to 6, except for that the aluminum plate was changed as the aluminum plate shown in Table 4, the resin composition (P) was changed to a PEEK resin (AV651GS30) manufactured by Solvay S.A., and the injection molding conditions were changed to have the cylinder temperature of 410°C, the die temperature of 195°C, the holding pressure of 130 MPa, and the holding time of 8 seconds. The evaluation result of the bonding strength is shown in Table 4.

[Example 13]

Each of the metal-resin composite structure 106 was obtained in the same manner as in Examples 1 to 6, except for that the aluminum plate was changed as the aluminum plate shown in Table 4, the resin composition (P) was changed to a TPU resin (T8190N) manufactured by DIC Bayer Polymer Ltd., and the injection molding conditions were changed to have the cylinder temperature of 210 °C, the die temperature of 100°C, the holding pressure of 100 MPa, and the holding time of 15 seconds. The evaluation result of the bonding strength is shown in Table 4.

[Example 14]

The metal-resin composite structure 106 was obtained by the same method as in Example 1, except for that the aluminum plate was changed as the aluminum plate shown in Table 4. The evaluation result of the bonding strength is shown in Table 4.

[Comparative Examples 1 to 5]

The metal-resin composite structure 106 was obtained by the same method as in Examples 1 to 6, except for that the aluminum plate was changed as the aluminum plate shown in Table 4. The evaluation result of the bonding strength is shown in Table 4.

[Table 4]

|  | Kind of aluminum plate | Kind of resin | Bonding strength [MPa] | Fracture morphology |
|---|---|---|---|---|
| Example 1 | Preparation Example 6 | PBT | 40.5 | Material fracture |
| Example 2 | Preparation Example 7 | PBT | 39.5 | Material fracture |
| Example 3 | Preparation Example 8 | PBT | 39.4 | Material fracture |
| Example 4 | Preparation Example 9 | PBT | 39.8 | Material fracture |
| Example 5 | Preparation Example 10 | PBT | 38.4 | Material fracture |
| Example 6 | Preparation Example 11 | PBT | 38.7 | Material fracture |
| Example 7 | Preparation Example 8 | PP | 27.8 | Material fracture |
| Example 8 | Preparation Example 9 | PP | 27.1 | Material fracture |
| Example 9 | Preparation Example 8 | PC | 36.8 | Material fracture |
| Example 10 | Preparation Example 10 | PC | 36.2 | Material fracture |
| Example 11 | Preparation Example 7 | PEEK | 46.1 | Material fracture |
| Example 12 | Preparation Example 10 | PEEK | 45.5 | Material fracture |
| Example 13 | Preparation Example 9 | TPU | 23.1 | Material fracture |
| Example 14 | Preparation Example 12 | PBT | 40.3 | Material fracture |
| Comparative Example 1 | Preparation Example 1 | PBT | 34.5 | Material fracture |
| Comparative Example 2 | Preparation Example 2 | PBT | 35.5 | Material fracture |
| Comparative Example 3 | Preparation Example 3 | PBT | 35.2 | Material fracture |
| Comparative Example 4 | Preparation Example 4 | PBT | 34.9 | Material fracture |
| Comparative Example 5 | Preparation Example 5 | PBT | 30.2 | Partial material fracture |

As shown in Table 4, in the metal-resin composite structure molded by using the aluminum plate having a surface structure set to be in the specific ranges regulated in the embodiment, the material fracture level and the high-strength bonding which was not obtained in the related art, was obtained. On the other hand, in Comparative Examples 1 to 4, the strength of the material fracture level was obtained, but the strength is deteriorated compared to that in the examples, and the even roughness shape pattern is not obtained in the metal used, and accordingly, a variation in strength is expected in the large area bonding. In Comparative Example 5, the even roughness shape pattern is obtained, but the strength is insufficient, and only partial material fracture level is realized. Therefore, it can be said that, the aluminum plate having a surface structure set to be in the specific ranges regulated in the embodiment is excellent, from viewpoints of roughness evenness, low metal loss (lost coat, low environmental impact), and high-strength bonding.
As described above, the metal-resin composite structure 106 of the invention is integrally formed without easily separating of the metal member 103 and the resin member 105, and high bonding strength can be obtained.
Various shapes of the metal-resin composite structure 106 of the invention can be realized by a comparatively simple method. Therefore, this significantly contributes to development of industries of the invention.
This application claims priority based on Japanese Patent Application No. 2016-109286, filed on May 31, 2016, the entire disclosure of which is hereby incorporated by reference.

**Claims**

1. A metal-resin composite structure which is formed by bonding a metal member and a resin member formed of a resin composition,
   wherein a surface roughness measured regarding six linear portions in total including three arbitrary linear portions parallel with each other and another three arbitrary linear portions perpendicular to the former three linear portions on a surface of the metal member, based on JIS B0601 (corresponding international standard: ISO4287) satisfies both Requirements (1) and (2).

   (1) an average value of ten point average roughnesses (Rz) at an evaluated length of 4 mm is smaller than 20 μm
   (2) an average value of mean width of the profile elements (RSm) at an evaluated length of 4 mm is equal to or greater than 20 μm and smaller than 77 μm

2. The metal-resin composite structure according to claim 1,
   wherein the surface roughness measured regarding six linear portions in total including three arbitrary linear portions parallel with each other and another three arbitrary linear portions perpendicular to the former three linear portions on a surface of the metal member, based on JIS B0601 (corresponding international standard: ISO4287) further satisfies Requirement (3).
   (3) an average value of arithmetic average roughnesses (Ra) at an evaluated length of 4 mm is smaller than 5 μm

3. The metal-resin composite structure according to claim 1 or 2,
   wherein the surface roughness measured regarding six linear portions in total including three arbitrary linear portions parallel with each other and another three arbitrary linear portions perpendicular to the former three linear portions on a surface of the metal member, based on JIS B0601 (corresponding international standard: ISO4287) further satisfies Requirement (1A).
   (1A) an average value of ten point average roughnesses (Rz) at an evaluated length of 4 mm is equal to or greater than 1 μm and equal to or smaller than 15 μm

4. The metal-resin composite structure according to any one of claims 1 to 3,
   wherein the surface roughness measured regarding six linear portions in total including three arbitrary linear portions parallel with each other and another three arbitrary linear portions perpendicular to the former three linear portions on a surface of the metal member, based on JIS B0601 (corresponding international standard: ISO4287) further satisfies Requirement (3A).
   (3A) an average value of arithmetic average roughnesses (Ra) at an evaluated length of 4 mm is smaller than 3 μm

5. The metal-resin composite structure according to any one of claims 1 to 4,
   wherein the metal member is formed of metal materials containing one kind or two or more kinds of metals selected from iron, a steel material, stainless steel, aluminum, an aluminum alloy, magnesium, a magnesium alloy, copper, a copper alloy, zinc, a zinc alloy, tin, a tin alloy, titanium, and a titanium alloy.

6. The metal-resin composite structure according to any one of claims 1 to 5,
   wherein the resin composition contains one kind or two or more kinds of thermoplastic resins selected from a polyolefin-based resin, a polyester-based resin, a polyphenylene-based resin, and a polyamide-based resin.

7. The metal-resin composite structure according to any one of claims 1 to 6,
   wherein the resin composition contains one kind or two or more kinds of thermoplastic resins, having a glass transition temperature equal to or higher than 140°C, selected from a polyether ether ketone resin, a polyether ketone resin, a polyimide resin, a polyphenylsulfone resin, and a polyether sulfone resin.

8. The metal-resin composite structure according to any one of claims 1 to 7,
   wherein the resin composition contains one kind or two or more kinds of amorphous thermoplastic resins selected from a polystyrene resin, a polyacrylonitrile resin, a styrene-acrylonitrile copolymer resin, an acrylonitrile-butadiene-styrene copolymer resin, a polymethyl methacrylate resin, and a polycarbonate resin.

9. The metal-resin composite structure according to any one of claims 1 to 8,

wherein the resin composition contains one kind or two or more kinds of thermoplastic elastomers selected from a polyolefin-based elastomer, a polyurethane-based elastomer, a polystyrene-based elastomer, and a polyester-based elastomer.

10. The metal-resin composite structure according to any one of claims 1 to 9,
wherein the resin composition contains a thermosetting resin.

11. The metal-resin composite structure according to claim 10,
wherein the resin composition containing the thermosetting resin contains at least one kind selected from a long fiber reinforced composite structure and a continuous fiber reinforced composite structure.

12. A metal member used for bonding with a resin member formed of a resin composition,
wherein a surface roughness measured regarding six linear portions in total including three arbitrary linear portions parallel with each other and another three arbitrary linear portions perpendicular to the former three linear portions on a surface of the metal member, based on JIS B0601 (corresponding international standard: IS04287) satisfies both Requirements (1) and (2).

(1) an average value of ten point average roughnesses (Rz) at an evaluated length of 4 mm is smaller than 20 $\mu$m
(2) an average value of mean width of the profile elements (RSm) at an evaluated length of 4 mm is equal to or greater than 20 $\mu$m and smaller than 77 $\mu$m

13. The metal member according to claim 12,
wherein the surface roughness measured regarding six linear portions in total including three arbitrary linear portions parallel with each other and another three arbitrary linear portions perpendicular to the former three linear portions on a surface of the metal member, based on JIS B0601 (corresponding international standard: ISO4287) further satisfies Requirement (3).
(3) an average value of arithmetic average roughnesses (Ra) at an evaluated length of 4 mm is smaller than 5 $\mu$m

14. A manufacturing method of a metal member for manufacturing the metal member according to claim 12 or 13, the method comprising:
a step of roughening a surface of the metal member by an electroless treatment.

15. The manufacturing method of a metal member according to claim 14,
wherein, in the step of roughening the surface of the metal member, the surface of the metal member is subjected to a roughening treatment by an acid etching agent, and the acid etching agent contains an aqueous solution or a water dispersion, containing a metal salt (Q) represented by Formula (1).

$$MX \quad (1)$$

(In Formula (1), M represents a metal element in IA group, IIA group, IIIB group, or IVA group in the periodic table, and X represents fluorine atom, chlorine atom, bromine atom, or iodine atom)

16. The manufacturing method of a metal member according to claim 15,
wherein the acid etching agent contains at least one of a ferric ion and a cupric ion, and the aqueous solution or the water dispersion, containing the metal salt (Q) represented by Formula (1).

17. The manufacturing method of a metal member according to claim 15 or 16,
wherein the metal element (M) of Formula (1) is one or more kinds selected from Li, Na, K, Mg, Ca, Ba, and Al.

FIG.1

FIG.2

FIG.3

104

FIG. 4

SHORT DIRECTION

2.5 mm EACH

10mm

5mm
5mm

103

LENGTHWISE
DIRECTION

5mm
5mm
5mm

MEASUREMENT
LINEAR PORTIONS

105

CENTER LINE IN SHORT
DIRECTION

⊖ ... MEASUREMENT LINEAR PORTIONS
(THREE PORTIONS) IN SHORT DIRECTION

⊕ ... MEASUREMENT LINEAR PORTIONS
(THREE PORTIONS) IN LENGTHWISE DIRECTION

FIG.5

$L_1$

$L_2$

$L_2$

$L_3$

## INTERNATIONAL SEARCH REPORT

| International application No. |
| --- |
| PCT/JP2017/019770 |

**A. CLASSIFICATION OF SUBJECT MATTER**
*B32B15/08*(2006.01)i, *B29C45/14*(2006.01)i, *C23F1/16*(2006.01)i

According to International Patent Classification (IPC) or to both national classification and IPC

**B. FIELDS SEARCHED**

Minimum documentation searched (classification system followed by classification symbols)
B32B15/08, B29C45/14, C23F1/16

Documentation searched other than minimum documentation to the extent that such documents are included in the fields searched
Jitsuyo Shinan Koho          1922-1996  Jitsuyo Shinan Toroku Koho  1996-2017
Kokai Jitsuyo Shinan Koho    1971-2017  Toroku Jitsuyo Shinan Koho  1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2015/008847 A1  (Mitsui Chemicals, Inc.), | 1,3,5-9,12, |
|   | 22 January 2015 (22.01.2015), | 14-17 |
| Y | claims 1, 3, 5 to 6, 8 to 19; paragraphs [0022] to [0115]; fig. 1 to 4 & US 2015/0224742 A1 claims 1, 3, 5 to 6, 8 to 19; paragraphs [0021] to [0269]; fig. 1 to 4 & EP 2894240 A1        & KR 10-2015-0018906 A & CN 104583458 A | 2-11,13-17 |
| Y | JP 2014-136366 A  (National University Corporation Shizuoka University, Nippon Light Metal Co., Ltd.), 28 July 2014 (28.07.2014), claims 1, 7; paragraph [0011] (Family: none) | 2-11,13-17 |

[×] Further documents are listed in the continuation of Box C.  [ ] See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 27 July 2017 (27.07.17) | 08 August 2017 (08.08.17) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2017/019770

C (Continuation). DOCUMENTS CONSIDERED TO BE RELEVANT

| Category* | Citation of document, with indication, where appropriate, of the relevant passages | Relevant to claim No. |
|---|---|---|
| Y | JP 10-270629 A (Nippon Mining & Metals Co., Ltd.), 09 October 1998 (09.10.1998), paragraphs [0005] to [0013], [0016] (Family: none) | 2-11,13-17 |
| Y | JP 2012-193448 A (Hong Fu Jin Precision Industry (Shenzhen) Co., Ltd.), 11 October 2012 (11.10.2012), claims 1 to 2; paragraphs [0001], [0010] & US 2012/0237755 A1 claims 1, 3; paragraph [0001] & EP 2500156 A1     & CN 102672878 A | 2-11,13-17 |
| Y | WO 2015/087720 A1 (Sumitomo Bakelite Co., Ltd.), 18 June 2015 (18.06.2015), claims 1, 5, 19; paragraphs [0031] to [0051] & US 2016/0303820 A1 claims 1, 5, 19; paragraphs [0062] to [0111] & EP 3081376 A1     & CN 105829096 A | 10-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004216425 A
- JP 2009006721 A
- JP 2003064150 A
- JP 2004055248 A
- JP 2013052671 A
- JP 2002003805 A
- JP 2015008847 A
- JP 4541153 B
- JP 2005119005 A
- JP 2016109286 A